# EUROPÄISCHE PATENTSCHRIFT

(11) **EP 2 255 923 B1**
(45) Veröffentlichungstag und Bekanntmachung des Hinweises auf die Patenterteilung: **01.02.2012**
(21) Anmeldenummer: 10005529.2
(22) Anmeldetag: 27.05.2010
(51) Int. Cl.: B23Q 16/02, F16H 37/02

(54) **Rundschalttisch**
Rotary table
Plateau tournant

(30) Priorität: 28.05.2009 DE 102009023079
(43) Veröffentlichungstag der Anmeldung: 01.12.2010
(73) Patentinhaber: WEISS GmbH, 74722 Buchen (Odw.) (DE)
(72) Erfinder: Cafuta, Stanislav, 74722 Buchen-Hainstadt (DE)
(74) Vertreter: Manitz, Finsterwald & Partner GbR

(56) Entgegenhaltungen:
- DE-A1-102006 061 310
- DE-B3-102007 021 681
- GB-A- 890 116

## Beschreibung

Die vorliegende Erfindung betrifft einen Rundschalttisch mit einem Teller, der in eine Antriebsnut einer Kurventrommel eingreifende Mitnehmer aufweist, wobei der Teller über die Kurventrommel zu einer Drehbewegung um eine Drehachse antreibbar ist, die ihrerseits von einem Motor zu einer Drehbewegung um ihre Längsachse antreibbar ist.

Derartige Rundschalttische, wie sie grundsätzlich aus dem Stand der Technik in unterschiedlichen Ausführungsformen bekannt sind, dienen beispielsweise dazu, mehrere, auf dem genannten Teller bzw. auf darauf angeordneten Aufbauten gehaltene Werkstücke jeweils durch eine Rotation des Tellers von einer Bearbeitungs- oder Montagestation zu einer nächsten Bearbeitungs- oder Montagestation weiter zu transportieren. Dieser Transport erfolgt üblicher- aber nicht notwendigerweise im Rahmen eines Taktbetriebes, bei dem der Teller mit jedem Takt um ein Winkelmaß gedreht wird, das beispielsweise dem Winkelabstand zwischen zwei benachbarten, auf dem Teller angeordneten Werkstücken entsprechen kann.

Bei schweren Werkstücken tritt eine erhebliche Belastung der Komponenten des Rundschalttischs auf, die auch durch eine entsprechende Auslegung des Antriebs berücksichtigt werden muss. Einer der begrenzenden Faktoren der Kraftübertragung des Antriebs ist die Kopplung zwischen der Antriebsnut der Kurventrommel und den in diese eingreifenden Mitnehmern. Um besonders leistungsfähige Rundschalttische zu schaffen, wird daher üblicherweise eine zweite Antriebseinheit, d. h. eine zweite Kurventrommel mit einem dieser Trommel zugeordneten separaten Motor, vorgesehen. Ein solcher Rundschalttisch ist beispielsweise aus der DE 10 2007 021 681 B3 bekannt.

Die GB 890,116 offenbart einen Rundschalttisch gemäß dem Oberbegriff des Anspruchs 1.

Eine Aufgabe der Erfindung besteht darin, einen Rundschalttisch zu schaffen, der zuverlässig auch große Belastungen bewältigen kann. Der Rundschalttisch soll kostengünstig herzustellen sein.

Diese Aufgabe wird erfindungsgemäß durch einen Rundschalttisch mit den Merkmalen des Anspruchs 1 gelöst.

Mit anderen Worten wird der Teller zusätzlich zu der über die bekannte Antriebsnut/Mitnehmer-Kopplung bereitgestellten Antriebskraft über das Zusatzantriebselement und das Kopplungselement von der Kurventrommel angetrieben. Eine zweite Kurventrommel zur Erhöhung der dem Teller zugeführten Antriebskraft ist somit nicht erforderlich. Der zusätzliche mechanische Kopplungsweg entlastet die Antriebsnut und die Mitnehmer des Tellers, wodurch deren begrenzte Antriebskraftübertragung nicht mehr als limitierender Faktor die Maximalbelastung des Rundschalttischs vorgibt. Zudem werden Abnutzungserscheinungen der Antriebsnut und der Mitnehmer minimiert.

Die der Erfindung zugrunde liegende, überraschend einfache Idee stellt somit einen einfach aufgebauten und daher zuverlässigen Rundschalttisch zur Verfügung, der keine zusätzlichen elektrischen und daher kostspieligen Antriebselemente benötigt, um den Antrieb des Tellers zu verbessern.

Eine vorteilhafte Weiterbildung des erfindungsgemäßen Rundschalttischs sieht vor, dass das Kupplungselement einen Wellenabschnitt umfasst, der koaxial zu der Drehachse des Tellers drehbar angeordnet ist. Beispielsweise kann dieser Wellenabschnitt ein im Wesentlichen rohrartiger Hohlzylinder sein.

Insbesondere ist das Kopplungselement drehfest mit dem Teller und/oder dem Zusatzantriebselement verbunden. Dadurch entfallen beispielsweise kostspielige Getriebeelemente. Außerdem ist eine derartige Kopplung besonders leistungsfähig und wenig anfällig für Schäden. In diesem Zusammenhang ist zu erwähnen, dass die drehfesten Verbindung direkt oder indirekt ausgestaltet sein kann. Unter einer indirekten Verbindung ist eine Verbindung zu verstehen, die zwischen den genannten Bauteilen ein oder mehrere zwischengeschaltete Elemente vorsieht.

Es kann vorgesehen sein, dass die Drehachse des Tellers und die Drehachse des Zusatzantriebselements koaxial angeordnet sind.

Erfindungsgemäß umfasst das Zusatzantriebselement einen Zusatzteller, der in die Antriebsnut oder in eine Zusatzantriebsnut der Kurventrommel eingreifende Mitnehmer aufweist.

Insbesondere sind der Teller und das Zusatzantriebselement im Wesentlichen spiegelsymmetrisch in Bezug auf eine Symmetrieebene angeordnet, welche insbesondere die Drehachse der Kurventrommel enthält. Eine derartige Bauform ist besonders kompakt. Außerdem können für den Teller und das Zusatzantriebselement sowie die ihnen jeweils zugeordneten Mitnehmer beispielsweise im Wesentlichen die gleichen Bauteile verwendet werden, was sich positiv auf die Herstellungskosten des Rundschalttischs auswirkt. Asymmetrische Bauformen bieten sich insbesondere bei Anwendungen an, bei denen dem Zusatzantriebselement und dem Teller unterschiedliche Aufgaben zukommen, beispielsweise wenn das Zusatzantriebselement lediglich zur Bereitstellung eines weiteren mechanischen Kopplungswegs und zur Verbesserung der Lagerung vorgesehen ist, während der Teller zusätzlich zu den vorstehend genannten Aufgaben auch mit Werkstücken bestückt werden kann. Bestimmte Bauraumvorgaben können ebenfalls eine asymmetrische Bauform erforderlich machen.

Eine gleichmäßige Belastung der Antriebskomponenten des Rundschalttischs ergibt sich, wenn der Teller und das Zusatzantriebselement von der Kurventrommel im Wesentlichen gleich stark antreibbar sind.

In Gebrauchslage des Rundschalttischs können die Drehachse des Tellers und/oder die Drehachse des Zusatzantriebselements im Wesentlichen vertikal angeordnet sein. Die zu bearbeitenden Werkstücke "liegen" dann auf dem Teller. Eine alternative Bauform weist im Gegensatz dazu im Wesentlichen horizontal angeordnete Drehachsen des Tellers und/oder des Zusatzantriebselements auf. Dies ermöglicht eine besonders effiziente Verwendung des Rundschalttischs, da sowohl der Teller als auch das Zusatzantriebselement von der Seite gut zugänglich sind und somit daran angeordnete Werkstücke an sich gegenüberliegenden Seiten des Rundschalttisches gut bearbeitet werden können. Grundsätzlich kann aber auch das Zusatzantriebselement der "vertikalen" Variante des Rundschalttischs mit Werkstücken, z.B. von unten, bestückt werden.

Der Teller und/oder das Zusatzantriebselement können mit je einem Flansch zur Halterung eines Werkstücks gekoppelt sein. Dies ermöglicht beispielsweise eine einfache Anpassung des Rundschalttischs an die zu bearbeitenden Werkstücke, da lediglich der Flansch ausgetauscht werden muss, wenn eine andere Art von Werkstücken bearbeitet werden soll. Weitere Ausführungsformen der Erfindung sind in der Beschreibung, den Unteransprüchen und den Zeichnungen angegeben.

Die Erfindung wird nachfolgend rein beispielhaft anhand vorteilhafter Ausführungsformen des erfindungsgemäßen Rundschalttischs unter Bezugnahme auf die Zeichnungen beschrieben. Es zeigen:
- Fig. 1: eine schematische Darstellung einer Ausführungsform des erfindungsgemäßen Rundschalttischs in einer Draufsicht,
- Fig. 2: einen Querschnitt durch einen Teil der in Fig. 1 gezeigten Ausführungsform,
- Fig. 3: eine perspektivische Ansicht der in Fig. 1 gezeigten Ausfüh- rungsform, und
- Fig. 4: eine perspektivische Ansicht einer weiteren Ausführungsform des erfindungsgemäßen Rundschalttischs,
- Fig. 5: einen Querschnitt durch eine weitere Ausführungsform des erfindungsgemäßen Rundschalttischs.

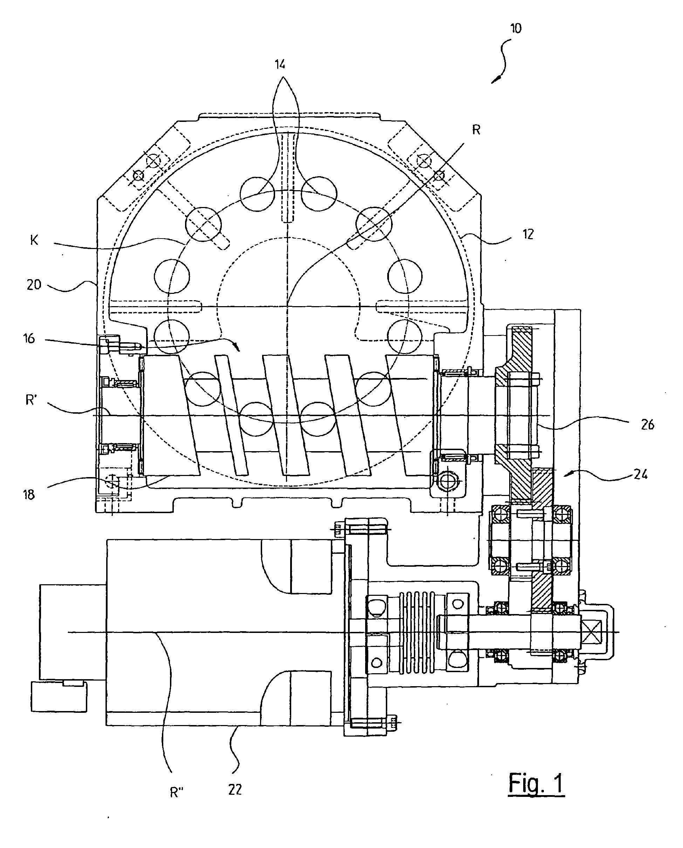

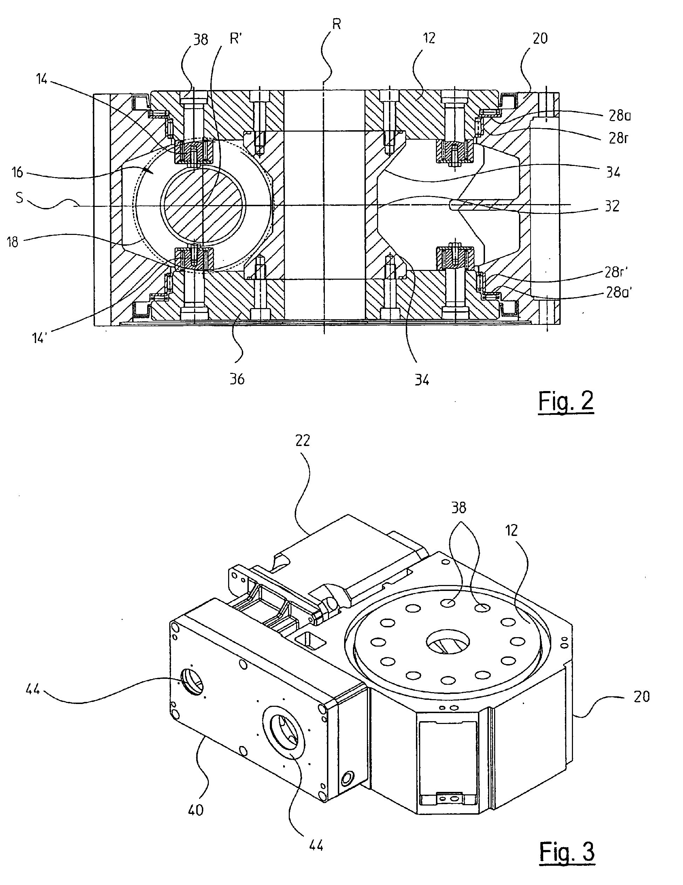

Fig. 1 zeigt in einer Draufsicht schematisch einen Rundschalttisch 10, der einen drehbar gelagerten Teller 12 aufweist (gestrichelt angedeutet). Der Teller 12 ist in Fig. 1 transparent gehalten, um an dessen Unterseite angeordnete Mitnehmer 14 nicht zu verdecken. Die Mitnehmer 14 sind in Umfangsrichtung des Tellers 12 gleichmäßig verteilt und liegen auf einem gedachten Kreis K, dessen Mittelpunkt auf einer Rotationsachse R des drehbar gelagerten Tellers 12 liegt. Die Lagerung des Tellers 12 erfolgt durch ein Gehäuse 20 des Rundschalttischs 10, wie nachstehend eingehender anhand von Fig. 2 erläutert werden wird.

Die Mitnehmer 14 weisen eine senkrecht zur Bildebene der Fig. 1 verlaufende Längserstreckung auf und greifen dadurch in eine Antriebsnut 16 einer Kurventrommel 18 ein. Die Kurventrommel 18 ist um eine Drehachse R' drehbar in dem Gehäuse 20 gelagert, das auch der Lagerung des Tellers 12 dient.

Um den Teller 12 in Rotation zu versetzen, wird die Kurventrommel 18 in eine Drehbewegung versetzt. Die spiralförmig um die Kurventrommel 18 umlaufende Antriebsnut 16 nimmt bei einer Drehung die Mitnehmer 14 mit, wodurch wiederum der Teller 12 in eine Drehbewegung versetzt wird. Diese Antriebsart des Tellers 12 ist grundsätzlich aus dem Stand der Technik bekannt. Ebenfalls bekannt ist, dass die Ausgestaltung der Antriebsnut 16 zusammen mit der Antriebsdrehbewegung der Kurventrommel 18 die Drehbewegung des Tellers 12 steuert. Mit anderen Worten kann die Antriebsnut 16 abweichend von der dargestellten Ausführungsform Bereiche mit unterschiedlicher oder variierender Steigung aufweisen. Es können auch Rastbereiche der Antriebsnut 16 vorgesehen sein, die sich in einer Draufsicht senkrecht zu der Rotationsachse R' erstrecken. Bei einer geeigneten Anordnung und Anzahl von Mitnehmern 14 kann dann beispielsweise ohne Veränderung der Antriebsdrehzahl der Kurventrommel 18 ein Taktbetrieb des Tellers 12 erzeugt werden. Ein solcher Betrieb kann aber auch bei konstanter Steigung der Antriebsnut 16 durch einen entsprechend gesteuerten Antrieb der Kurventrommel 18 realisiert werden.

Der Antrieb der Kurventrommel 18 erfolgt durch einen Elektromotor 22, dessen Rotationsachse R" parallel zu der Rotationsachse R' der Kurventrommel 18 angeordnet ist. Ein durch den Motor 22 erzeugtes Antriebsmoment wird in an sich bekannter Weise über ein Getriebe 24 - vorliegend ein Stirnradgetriebe - auf eine Antriebswelle 26 der Kurventrommel 18 übertragen, wodurch in der vorstehend beschriebenen Weise der Teller 12 zu einer Drehbewegung um die Rotationsachse R angetrieben wird. Die Rotationsachse R verläuft senkrecht zu den Rotationsachsen R', R".

Wie eingangs erläutert, stellt die Kopplung zwischen den Mitnehmern 14 und den Flanken der Antriebsnut 16 einen mechanisch limitierenden Faktor für einen zuverlässigen Antrieb des Tellers 12 auch bei großen Belastungen dar. Konkret bedeutet das, dass die linke Flanke der um die Kurventrommel 18 spiralförmig umlaufenden Antriebsnut 16 belastet wird, wenn der dargestellte Teller 12 zu einer Drehbewegung entgegen dem Uhrzeigersinn angetrieben wird. Um diese Belastung zu verringern und damit den Antrieb des Tellers 12 zu verbessern, ist ein zusätzlicher mechanischer Kopplungsweg zwischen der Kurventrommel 18 und dem Teller 12 vorgesehen, wie in Fig. 2 gezeigt ist.

Fig. 2 zeigt einen senkrechten Schnitt durch den Teller 12, die Kurventrommel 18 und das Gehäuse 20. Zu erkennen ist, dass der Teller 12 durch ein Axiallager 28a und ein Radiallager 28r in dem Gehäuse 20 drehbar gelagert ist.

Wie bereits vorstehend beschrieben, ist der Teller 12 mit Mitnehmern 14 versehen. In Gebrauchslage des Tellers 12, auf dem - unmittelbar und/oder mittelbar - zu bearbeitende Werkstücke (nicht gezeigt) befestigbar sind, befinden sich die Mitnehmer 14 an der Unterseite des Tellers 12. Sie greifen in der vorstehend beschriebenen Weise in die Antriebsnut 16 der Kurventrommel 18 ein.

Der Teller 12 wird jedoch nicht nur über die Kopplung der Mitnehmer 14 mit der Kurventrommel 18 angetrieben. Um einen weiteren mechanischen Kopplungsweg zwischen de Kurventrommel 18 und dem Teller 12 zu schaffen, ist er ist zusätzlich drehfest mit einem Kopplungszylinder 32 verbunden. Der koaxial zu dem Teller 12 angeordnete Kopplungszylinder 32 weist an seinen Stirnseiten jeweils eine flanschartige Erweiterung 34 auf. Die Erweiterung 34 an der in Gebrauchslage oberen Stirnseite dient zur Verbindung des Kopplungszylinders 32 mit dem Teller 12. An der anderen - unteren - Stirnseite des Kopplungszylinders 32 steht dieser über die Erweiterung 34 mit einem Zusatzteller 36 in drehfester Verbindung.

Der Zusatzteller 36 ist in analoger Weise wie der Teller 12 mit der Kurventrommel 18 antriebswirksam verbunden. Im Wesentlichen ist die Konstruktion der dem Zusatzteller 36 zugeordneten Komponenten - z. B. Mitnehmer 14', Lager 28a', 28r' - identisch mit den entsprechenden Komponenten, die dem Teller 12 zugeordnet sind. Lediglich die räumliche Anordnung unterscheidet sich aufgrund der Tatsache, dass der Zusatzteller 36 "von unten" mit der Kurventrommel 18 zusammenwirkt. Die Komponenten sind daher symmetrisch zu einer Symmetrieebene S angeordnet, die die Rotationsachse R' der Kurventrommel 18 enthält und die senkrecht auf der gemeinsamen Rotationsachse R der Teller 12, 36 steht. Den Mitnehmern 14' des Zusatztellers 36 ist keine eigene Antriebsnut 16 zugeordnet, d. h. die Mitnehmer 14, 14' greifen in die gleiche Antriebsnut 16 ein. Für bestimmte Anwendungen ist es aber durchaus denkbar, dass für die Mitnehmer 14' eine eigene Antriebsnut vorgesehen ist, die beispielsweise eine in axialer Richtung parallel zu der Antriebsnut 16 versetzte spiralförmige Nut sein kann. Dieser Versatz ist in diesem Fall auch bei der Anordnung der Mitnehmer 14' zu berücksichtigen, die bei der vorliegenden Ausführungsform mit den Mitnehmern 14 in einer Richtung parallel zu der Rotationsachse R fluchten.

Durch den symmetrischen Aufbau des "klassischen" und des "zusätzlichen" Kopplungsweges zwischen der Kurventrommel 18 und dem Teller 12 - direkte Kopplung zwischen Kurventrommel 18 und Teller 12 einerseits und indirekte Kopplung dieser beiden Komponenten über den Zusatzteller 36 und den Kopplungszylinder 32 andererseits - wird auf einfache Weise sichergestellt, dass die Antriebskraft zu im Wesentlichen gleichen Teilen über die beiden Kopplungswege von der Kurventrommel 18 auf den Teller 12 übertragen wird. Dies bedeutet auch, dass die punktuell auf die belastete Flanke der Antriebsnut 16 wirkende Maximalbelastung halbiert ist, verglichen mit den entsprechenden Belastungen, die bei einem Rundschalttisch auftreten, der lediglich die direkte Kopplung zwischen der Kurventrommel 18 und dem Teller 12 aufweist.

Es versteht sich, dass die symmetrische Ausgestaltung des Tellers 12 und des Zusatztellers 36 nicht in allen Fällen vorgesehen sein muss. Zwar ist diese Ausführungsform auch hinsichtlich der Herstellungskosten vorteilhaft, da für die Bereitstellung eines zusätzlichen mechanischen Kopplungswegs keine zusätzlichen, konstruktiv anders ausgestalteten Bauteile erforderlich sind. Allerdings kann die konkrete Konstruktion an das jeweils vorliegende Anwendungsprofil angepasst werden. Denkbar ist beispielsweise eine Kopplung über bewegliche Bauteile - beispielsweise Zahnräder - und/oder unterschiedlich dimensionierte Komponenten.

Fig. 3 zeigt eine perspektivische Darstellung des Rundschalttisches 10. Rechts ist der Teller 12 zu erkennen, der in dem Gehäuse 20 gelagert ist. In der Oberfläche des Tellers 12 sind Bohrungen 38 zu erkennen, die zur Befestigung der Mitnehmer 14 dienen, wie auch Fig. 2 zu entnehmen ist. Die Bohrungen 38 können gegebenenfalls auch zur direkten oder indirekten Befestigung von Werkstücken vorgesehen sein. Grundsätzlich kann eine Vielzahl unterschiedlicher Befestigungsarten zum Einsatz gelangen.

Das Gehäuse 30 verdeckt die Kurventrommel 18, die im Wesentlichen vollständig im Inneren des Gehäuses 20 angeordnet ist. Ein Wellenabschnitt der Antriebswelle 26 der Kurventrommel 18 ragt - wie in Fig. 1 zu sehen ist - aus dem Gehäuse 30 heraus. Dort steht er mit dem Getriebe 24 in Verbindung, das in Fig. 3 von einem Getriebegehäuse 40 umschlossen und daher nicht sichtbar ist. Das Getriebe 24 steht wiederum mit dem Motor 22 in Verbindung.

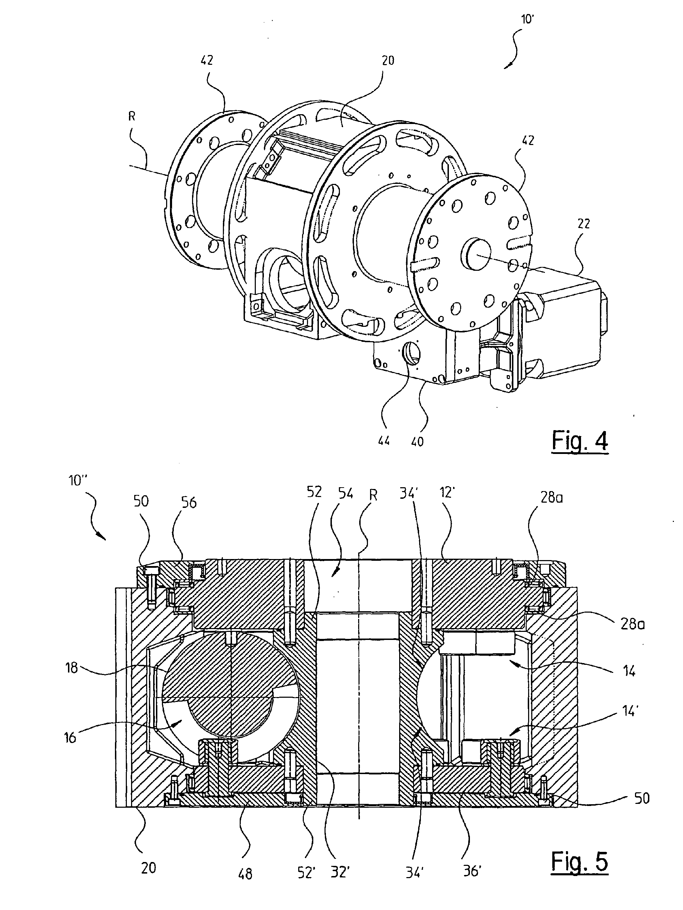

Eine weitere Ausführungsform des Rundschalttisches 10' ist in Fig. 4 dargestellt. Hierbei ist das Gehäuse 20 in der Gebrauchslage in einer senkrechten Stellung angeordnet, so dass der Teller 12 und der Zusatzteller 36 (beide nicht sichtbar) ebenfalls in einer jeweiligen senkrechten Ebene angeordnet sind. Die gemeinsame Rotationsachse R der beiden Teller 12, 36 verläuft im Wesentlichen in einer Horizontalen. Aufgrund der vertikalen Gehäuse-/Telleranordnung sind die Teller 12, 36 bequem von beiden Seiten zugänglich, d. h. sowohl der Teller 12 als auch der Zusatzteller 36 können mit Werkstücken versehen werden. Mit anderen Worten kann mit einem Rundschalttisch 10' pro Zeiteinheit die doppelte Menge von Werkstücken bearbeitet werden verglichen mit einem herkömmlichen Rundschalttisch.

In der in Fig. 4 dargestellten Rundschalttischvariante 10' ist an den Tellern 12, 36 jeweils ein Flansch 42 angebracht. Die Flansche 42 dienen der Befestigung von Werkstücken und können an die jeweils vorliegenden Gegebenheiten angepasst werden.

Fig. 4 zeigt neben den vorstehend beschriebenen Besonderheiten des Rundschalttischs 10' unter anderem auch eine Anordnung des Motors 22, die von der des Rundschalttischs 10 abweicht. Bei dem Rundschalttisch 10' sind der Motor 22 und das Gehäuse 20 nicht auf einer Seite des Getriebes 24 bzw. des Getriebegehäuses 40 sondern an gegenüber liegenden Seiten angeordnet. Die Rotationsachse R" des Motors ist allerdings weiterhin parallel zu der Rotationsachse R' der (nicht sichtbaren) Kurventrommel 18 angeordnet.

In diesem Zusammenhang ist es vorteilhaft, wenn das Getriebe 24 modular aufgebaut ist, d.h. wenn das Getriebe 24 von beiden Seiten des Gehäuses 40 antriebswirksam mit Eingangs- bzw. Ausgangswelle in Verbindung gebracht werden kann. Zu diesem Zweck weist das Gehäuse 40 an beiden Stirnseiten zwei Öffnungen 44 (siehe auch Fig. 3) auf, jeweils eine für eine Eingangswelle und eine für eine Ausgangswelle. Ein solcher modularer Aufbau reduziert die Herstellungskosten und erweitert die Einsatzflexibilität des erfindungsgemäßen Rundschalttischs, da beispielsweise ein Umbau zwischen den Ausführungsformen 10, 10' auf einfache Weise erfolgen kann. Ein Austausch des Getriebes 24 ist dazu nämlich nicht erforderlich.

Fig. 5 zeigt einen senkrechten Schnitt durch eine weitere Ausführungsform des Rundschalttischs 10". Bei dieser Ausführungsform sind - im Gegensatz zu der in Fig. 2 dargestellten Ausführungsform - der "klassische" und der " zusätzliche" mechanische Kopplungsweg nicht symmetrisch aufgebaut. Zwar werden der Teller 12' und der Zusatzteller 36' des Rundschalttischs 10" in der vorstehend beschriebenen Weise über Mitnehmer 14 bzw. 14' angetrieben. Allerdings unterscheiden sich die beiden Ausführungsformen unter anderem durch die Lagerung der Teller 12, 36 bzw. 12', 36'. Der Teller 12' des Rundschalttischs 10' ist durch zwei Axiallager 28a und ein Radiallager 28r gelagert, während der Zusatzteller 36' lediglich von einem Radiallager 28r' in seiner Drehbewegung geführt ist. Zur Vereinfachung der Montage ist eines der Axiallager 28a einem Ringelement 56 zugeordnet, das durch Bolzen 50 mit dem Gehäuse 20 verbunden ist.

Durch die vorstehend beschriebene Anordnung der Lager 28a, 28r, 28r' wird die axiale Lagerung der starr miteinander verbundenen Elemente Teller 12', Kopplungszylinder 32' und Zusatzteller 36' im Wesentlichen durch den Teller 12' bereitgestellt. Der Zusatzteller 36' wirkt unterstützend bei der Abstützung in radialer Richtung.

Der Zusatzteller 36' ist deutlich weniger massiv ausgebildet als der Teller 12', da er nicht standardmäßig für eine Bestückung mit Werkstücken vorgesehen ist. Eine Abdeckplatte 48 ist durch Bolzen 50 fest mit dem Gehäuse 20 verbunden und schirmt den Zusatzteller 36' von der Umgebung ab, beispielsweise um das Eindringen von Schutz zu verhindern.

Die asymmetrische Ausbildung des Rundschalttischs 10" findet ihren Niederschlag auch in der Ausgestaltung des Kopplungszylinders 32'. Der Kopplungszylinder 32' weist - ähnlich wie der Kopplungszylinder 32 des Rundschalttischs 10 - Erweiterungen 34' auf, die zur Befestigung des Tellers 12' und des Zusatztellers 36' dienen und deren Formgebung sich zur Bereitstellung größtmöglicher Stabilität bei gleichzeitiger Bauraumoptimierung an der Kontur der Kurventrommel 18 orientiert. Ein axialer Fortsatz 52' des Kopplungszylinders 32' durchdringt jedoch in axialer Richtung den Zusatzteller 36', während ein entsprechender axialer Fortsatz 52 nur teilweise in eine zentrale Öffnung 54 des Tellers 12' eindringt.

### Bezugszeichenliste

- 10, 10': Rundschalttisch
- 12, 12': Teller
- 14, 14': Mitnehmer
- 16: Antriebsnut
- 18: Kurventrommel
- 20: Gehäuse
- 22: Elektromotor
- 24: Getriebe
- 26: Antriebswelle
- 28a, 28a': Axiallager
- 28r, 28r': Radiallager
- 32, 32': Kopplungszylinder
- 34, 34': Erweiterung
- 36, 36': Zusatzteller
- 38: Bohrung
- 40: Getriebegehäuse
- 42: Flansch
- 44: Öffnung
- 48: Abdeckplatte
- 50: Bolzen
- 52, 52': axialer Fortsatz
- 54: zentrale Öffnung
- 56: Ringelement
- R, R', R": Rotationsachse
- K: Kreis
- S: Symmetrieebene

## Patentansprüche

1. Rundschalttisch mit einem Teller (12, 12'), der in eine Antriebsnut (16) einer Kurventrommel (18) eingreifende Mitnehmer (14) aufweist, wobei der Teller (12, 12') über die Kurventrommel (18) zu einer Drehbewegung um eine Drehachse (R) antreibbar ist, die ihrerseits von einem Motor (22) zu einer Drehbewegung um ihre Längsachse (R') antreibbar ist, wobei
ein mit der Kurventrommel (18) antriebswirksam verbundenes Zusatzantriebselement (36, 36') vorgesehen ist, welches über zumindest ein Kopplungselement (32, 32') mit dem Teller (12, 12') gekoppelt ist,
**dadurch gekennzeichnet, dass**
das Zusatzantriebselement einen Zusatzteller (36, 36') umfasst, der in die Antriebsnut (16) oder in eine Zusatzantriebsnut der Kurventrommel (18) eingreifende Mitnehmer (14') aufweist.

2. Rundschalttisch nach Anspruch 1,
**dadurch gekennzeichnet, dass**
das Kopplungselement (32, 32') einen Wellenabschnitt umfasst, der koaxial zu der Drehachse (R) des Tellers (12, 12') drehbar angeordnet ist.

3. Rundschalttisch nach Anspruch 1 oder 2,
**dadurch gekennzeichnet, dass**
das Kopplungselement (32, 32') drehfest mit dem Teller (12, 12') und/oder dem Zusatzantriebselement (36, 36') verbunden ist.

4. Rundschalttisch nach einem der vorstehenden Ansprüche,
**dadurch gekennzeichnet, dass**
die Drehachse (R) des Tellers (12, 12') und die Drehachse (R) des Zusatzantriebselements (36, 36') koaxial angeordnet sind.

5. Rundschalttisch nach einem der vorstehenden Ansprüche,
**dadurch gekennzeichnet, dass**
der Teller (12) und das Zusatzantriebselement (36) im Wesentlichen spiegelsymmetrisch in Bezug auf eine Symmetrieebene (S) angeordnet sind, welche insbesondere die Drehachse (R') der Kurventrommel (18) enthält.

6. Rundschalttisch nach einem der vorstehenden Ansprüche,
**dadurch gekennzeichnet, dass**
der Teller (12, 12') und das Zusatzantriebselement (36, 36') von der Kurventrommel (18) im Wesentlichen gleich stark antreibbar sind.

7. Rundschalttisch nach einem der vorstehenden Ansprüche,
**dadurch gekennzeichnet, dass**
die Drehachse (R) des Tellers (12, 12') und/oder die Drehachse (R) des Zusatzantriebselements (36, 36') in Gebrauchslage des Rundschalttischs im Wesentlichen vertikal angeordnet sind.

8. Rundschalttisch nach einem der vorstehenden Ansprüche,
**dadurch gekennzeichnet, dass**
die Drehachse (R) des Tellers (12, 12') und/oder die Drehachse (R) des Zusatzantriebselements (36, 36') in Gebrauchslage des Rundschalttischs im Wesentlichen horizontal angeordnet sind.

9. Rundschalttisch nach einem der vorstehenden Ansprüche,
**dadurch gekennzeichnet, dass**
der Teller (12) und/oder das Zusatzantriebselement (36) mit je einem Flansch (42) zur Halterung eines Werkstücks gekoppelt sind.

## Claims

1. A rotary indexing table having a plate (12, 12') which has drivers (14) engaging into a driving groove (16) of a barrel cam (18), wherein the plate (12, 12') is drivable via the barrel cam (18) to make a rotary movement about the rotary axle (R) which is in turn drivable by a motor (22) to make a rotary movement about its longitudinal axis (R'), wherein
an additional drive element (36, 36') is provided which is connected drive-wise to the barrel cam (18) and which is coupled to the plate (12, 12') via at least one coupling element (32, 32'),
**characterized in that**
the additional drive element includes an additional plate (36, 36') which has drivers (14') engaging into the driving groove (16) or into an additional driving groove of the barrel cam (18).

2. A rotary indexing table in accordance with claim 1, **characterized in that** the coupling element (32, 32') includes a shaft section which is rotatably arranged coaxial to the rotary axle (R) of the plate (12, 12').

3. A rotary indexing table in accordance with claim 1 or claim 2, **characterized in that** the coupling element (32, 32') is rotationally fixedly connected to the plate (12, 12') and/or to the additional drive element (36, 36').

4. A rotary indexing table in accordance with any one of the preceding claims, **characterized in that** the rotary axle (R) of the plate (12, 12') and the rotary axle (R) of the additional element (36, 36') are arranged coaxial.

5. A rotary indexing table in accordance with any one of the preceding claims, **characterized in that** the plate (12) and the additional driving element (36) are arranged in substantially mirror symmetry with respect to a plane of symmetry (S) which in particular includes the axis of rotation (R') of the barrel cam (18).

6. A rotary indexing table in accordance with any one of the preceding claims, **characterized in that** the plate (12, 12') and the additional drive element (36, 36') can be driven substantially equally powerfully by the barrel cam (18).

7. A rotary indexing table in accordance with any one of the preceding claims, **characterized in that** the rotary axle (R) of the plate (12, 12') and/or the rotary axle (R) of the additional drive element (36, 36') is/are arranged substantially vertical in the position of use of the rotary indexing table.

8. A rotary indexing table in accordance with any one of the preceding claims, **characterized in that** the rotary axle (R) of the plate (12, 12') and/or the rotary axle (R) of the additional drive element (36, 36') is/are arranged substantially horizontal in the position of use of the rotary indexing table.

9. A rotary indexing table in accordance with any one of the preceding claims, **characterized in that** the plate (12) and/or the additional drive element (36) is/are coupled to a respective one flange (42) each for the holding of a workpiece.

## Revendications

1. Plate-forme tournante, comprenant un plateau (12, 12') qui comprend des ergots d'entraînement (14) engagés dans une gorge d'entraînement (16) d'un tambour à came (18), le plateau (12, 12') pouvant être entraîné via le tambour à came (18) en un mouvement rotatif autour d'un axe de rotation (R), lequel peut être de son côté entraîné par un moteur (22) en un mouvement rotatif autour de son axe longitudinal (R'), dans laquelle
il est prévu un élément d'entraînement additionnel (36, 36') relié en termes d'entraînement au tambour à came (18) et couplé au plateau (12, 12') via au moins un élément d'accouplement (32, 32'), **caractérisée en ce que**
l'élément d'entraînement additionnel comprend un plateau additionnel (36, 36') qui comprend des ergots d'entraînement (14') engagés dans une gorge d'entraînement additionnelle du tambour à cames (18).

2. Plate-forme tournante selon la revendication 1,
**caractérisée en ce que** l'élément d'accouplement (32, 32') comprend un tronçon d'arbre qui est agencé en rotation coaxialement à l'axe de rotation (R) du plateau (12, 12').

3. Plate-forme tournante selon la revendication 1 ou 2,
**caractérisée en ce que** l'élément d'accouplement (32, 32') est relié solidairement en rotation au plateau (12, 12') et/ou à l'élément d'entraînement additionnel (36, 36').

4. Plate-forme tournante selon l'une des revendications précédentes,
**caractérisée en ce que** l'axe de rotation (R) du plateau (12, 12') et l'axe de rotation (R) de l'élément d'entraînement additionnel (36, 36') sont agencés coaxialement.

5. Plate-forme tournante selon l'une des revendications précédentes,
**caractérisée en ce que** le plateau (12) et l'élément d'entraînement additionnel (36) sont agencés sensiblement à la symétrie plane par rapport à un plan de symétrie (S) qui contient en particulier l'axe de rotation (R') du tambour à came (18).

6. Plate-forme tournante selon l'une des revendications précédentes,
**caractérisée en ce que** le plateau (12, 12') et l'élément d'entraînement additionnel (36, 36') peuvent être entraînés par le tambour à came (18) sensiblement avec la même force.

7. Plate-forme tournante selon l'une des revendications précédentes,
**caractérisée en ce que** l'axe de rotation (R) du plateau (12, 12') et/ou l'axe de rotation (R) de l'élément d'entraînement additionnel (36, 36') sont agencés sensiblement verticalement dans la position d'utilisation de la plate-forme tournante.

8. Plate-forme tournante selon l'une des revendications précédentes,
**caractérisée en ce que** l'axe de rotation (R) du plateau (12, 12') et/ou l'axe de rotation (R) de l'élément d'entraînement additionnel (36, 36') sont agencés sensiblement horizontalement dans la position d'utilisation de la plate-forme tournante.

9. Plate-forme tournante selon l'une des revendications précédentes,
**caractérisée en ce que** le plateau (12) et/ou l'élément d'entraînement additionnel (36) sont accouplés chacun avec une bride (42) pour le maintien d'une pièce à oeuvrer.
